# EUROPÄISCHE PATENTSCHRIFT

(11) **EP 0 925 104 B1**
(45) Veröffentlichungstag und Bekanntmachung des Hinweises auf die Patenterteilung: **23.05.2001**
(21) Anmeldenummer: 97941975.1
(22) Anmeldetag: 01.09.1997
(51) Int. Cl.: B01D 46/52, B01D 29/01

(54) **FILTRATIONSEINHEIT MIT PLISSIERTEN FILTERELEMENTEN**
FILTRATION UNIT WITH PLEATED FILTERING ELEMENTS
UNITE DE FILTRATION A ELEMENTS FILTRANTS PLISSES

(30) Priorität: 05.09.1996 DE 19636006
(43) Veröffentlichungstag der Anmeldung: 30.06.1999
(73) Patentinhaber: SARTORIUS AG, 37075 Göttingen (DE)
(72) Erfinder: GRAUS, Andreas, D-37176 Nörten-Hardenberg (DE)
(86) Internationale Anmeldenummer: EP9704738
(87) Internationale Veröffentlichungsnummer: WO9809710

(56) Entgegenhaltungen:
- EP-A- 0 154 845
- DD-C- 79
- DE-A- 3 344 374
- GB-A- 2 179 872
- US-A- 3 762 564
- US-A- 3 765 536

## Beschreibung

Die Erfindung betrifft eine kompakte Filtrationseinheit mit einem plissierten Filterelement zur Filtration von Fluiden.
Sie ist anwendbar für Filtrationsaufgaben im Bereich der Biotechnologie, der Gentechnik, der Pharmazie, der Chemie, der Getränke- und Lebensmittelindustrie sowie des Umweltschutzes. Die Filtrationseinheit ist aufgrund ihrer Kompaktheit, des günstigen Verhältnisses ihrer Filterfläche zum Gehäusevolumen und ihres geringen Totvolumens besonders geeignet als Disposable für Laboratorien, aber auch für Arbeiten zur Maßstabsvergrößerung (scale-up) und bei Bestückung mit Membranadsorbern zur Gewinnung von Wertstoffen.

Kompakte Filtrationseinheiten mit plissierten Filterelementen sind zum Beispiel aus der CH-PS 568761 oder der EP 0 154 845 A2 bekannt. So beschreibt die CH-PS 568761 eine derartige als Blutfilter zu verwendende kompakte Filtrationseinheit, die aus einem rechteckigen mehrteiligen Gehäuse mit koaxialen Fluidanschlüssen besteht, die durch ein mehrlagiges plissiertes Filterelement so voneinander getrennt sind, das ein zu filtrierendes Fluid nur durch das Filterelement vom Fluideinlaß zum Fluidauslaß gelangen kann.
Das plissierte Filterelement ist mit jedem der beiden Enden der auslaufenden Faltenkanten zwischen speziell ausgebildeten Wandbereichen der oberen und unteren Gehäusehälfte eingeklemmt und mit ihnen verschweißt und mit den beiden Stirnseiten durch eine Verbundmasse mit je einem seitlichen Verschluß verschlossen. Entsprechende fluiddichte Verbindungen bestehen zwischen den vier Bauteilen des Gehäuses.
Die EP 0 154 845 A2 offenbart in Fig. 19 ein kreisrundes plissiertes Filterelement, das mit einer angepaßten Dichtung und mit einem Dichtungsflansch ausgestattet ist. Der Dichtungsflansch dient zum fluiddichten Einklemmen des kreisrunden plissierten Filterelements zwischen zwei Gehäusehälften, die ihrerseits an der Peripherie speziell abgedichtet sind.

Nachteilig ist die große Anzahl von Bauelementen und von Bereichen, in denen die einzelnen Bauelemente der Filtrationseinheit fluiddicht miteinander verbunden sind. Neben dem hohen technologischen Aufwand zur Herstellung der Filtrationseinheit stellen sie vor allem erhebliche Fehlerquellen dar, die häufig zu vorzeitigen Ausfällen der Filtrationseinheiten während des Gebrauchs führen können.

Die Aufgabe der Erfindung besteht deshalb darin, eine kompakte Filtrationseinheit mit plissierten Filterelementen aus wenigen Bauteilen zu schaffen, die über ein Minimum an abzudichtenden Bereichen verfügt.

Die Aufgabe wird gelöst durch eine Filtrationseinheit für Fluide mit mindestens einem plissierten Filterelement welches in einem zylinderförmigen Gehäuse aus zwei Teilen angeordnet ist und das Gehäuse in ein- und auslaßseitige über Fluidanschlüsse verfügende Gehäuseräume trennt, wobei die Falten und die Stegrücken quer zur zylinderförmigen Gehäusewand verlaufen und die offenen Falten und die Stegrücken der einen Seite des plissierten Filterelements dem einlaßseitigen Gehäuseraum und die offenen Falten und Stegrücken der anderen Seite des plissierten Filterelements dem auslaßseitigen Gehäuseraum zugewandt und die Stirnseiten des plissierten Filterelements der zylinderförmigen Gehäusewand mindestens einer der beiden Teile des Gehäuses benachbart sind und durch eine aushärtbare Dichtmasse mit ihr fluiddicht verbunden sind.
In einer vorteilhaften Ausgestaltung der Erfindung sind alle Bestandteile der Filtrationseinheit nur in einem einzigen Bereich durch die Dichtmasse fluiddicht miteinander verbunden.
Durch die rotationssymmetrische Form verfügt die erfindungsgemäße Filtrationseinheit darüberhinaus selbst bei Anströmkanälen mit extrem geringen Volumina über eine gleichmäßige Anströmung. Tote Winkel, wie sie bei eckigen Filtrationseinheiten auftreten und zu Leistungsverlusten führen oder Kontaminationsherde darstellen, werden vermieden.
Die erfindungsgemäße Filtrationseinheit ist mindestens bis zu Temperaturen von 135° C sterilisierbar. Sie ist rückspülbar und von beiden Seiten betreibbar.

Die Herstellung der Filtrationseinheit erfolgt nach einem Verfahren, das zum Beispiel aus der US-PS 4,227,295 an sich bekannt ist.
Als Dichtmasse werden aushärtbare flüssige Polymermaterialien verwendet, die mit dem Filtermaterial und dem Gehäusematerial eine dauerhafte fluiddichte Verbindung eingehen. Sie werden vorzugsweise ausgewählt aus der Gruppe der Polyurethane und der Epoxide. Als Gehäusematerial kommen organische Polymermaterialien in Frage, die vorzugsweise ausgewählt werden aus der Gruppe der Polystyrole, Polycarbonate, Polysulfone, Polyethersulfone und Polyacrylate.
Als Filtermaterialien für das plissierte Filterelement kommen Membranfilter und Tiefenfilter im Bereich der Mikrofiltration und Ultrafiltration allein und in Kombination untereinander in Frage. Die plissierten Filterelemente können aus einlagigen oder mehrlagigen Filtermaterilaien bestehen. In einer bevorzugten Ausführungsform werden Membranadsorber als Membranfilter eingesetzt. Für hohe Flußleistungen werden die plissierten Filterelemente vorzugsweise zwischen den Plissierfalten mit an- und/oder abströmseitigen Abstandshaltern ausgerüstet, wie zum Beispiel Geweben oder Vliesen, wobei die anströmseitigen Abstandshalter vorteilhafterweise weitmaschiger beziehungsweise grobporiger als die abströmseitigen Abstandshalter sind.
Als Filterelemente werden sowohl runde als auch vieleckige Plissierungen verwendet, wobei kreisrunde bevorzugt sind.
In einer vorteilhaften Ausgestaltung der Erfindung werden mehrere plissierte Filterelemente zur Stufenfiltration in Reihe nacheinander angeordnet. Dadurch wird die Filtrationssicherheit, im Falle von Membranadsorbern die Adsorptionskapazität oder durch Vorfilter die Standzeit der Filtrationseinheit erhöht.
Auf Filterunterstützungen kann verzichtet werden, wenn die plissierten Filterelemente so angeordnet werden, daß die Faltenstege des einen Filterelements zu den Faltenstegen des benachbarten plissierten Filterelements möglichst in einem Winkel, der von 0 Grad verschieden ist, angeordent sind.
In einer vorteilhaften Ausgestaltung der Erfindung ist dem plissierten Filterelement ein kreisrundes nicht plissiertes Filterelement gleichen Durchmessers beispielsweise aus einem faserigen nichtgewebten Vliesmaterial als Vorfilter vorgelagert, daß an seiner Peripherie gleichermaßen durch die Dichtmasse mit der zylindrischen Gehäusewand und dem plissierten Filterelement verbunden ist..

Aus strömungstechnischen Gründen kann die Filtrationseinheit mit bekannten An- und Abströmvorrichtungen für zu filtrierendes Fluid und für zu sammelndes Filtrat ausgerüstst sein. Die An- und Abströmvorrichtungen können in Form von mit Kanälen versehennen Verteiler- oder Stützplatten oder faserartigen Lagen, wie Gewebelagen in bekannter Weise in der Filtrationsvorrichtung angeordnet sein. Zum Schutz vor mechanischer Überanspruchung kann zusätzlich ein Prallschutz anströmseitig vorgesehen sein.
Durch entsprechende Fluidanschlüsse können die erfindungsgemäßen Filtrationseinheiten sowohl im Dead-End- als auch im Crossflow-Modus betrieben werden.

Die Erfindung soll anhand der nachstehenden Figuren 1 bis 4 und eines Ausführungsbeispiels näher erläutert werden. Dabei zeigen die
- Fig. 1: einen Schnitt durch eine Filtrationseinheit mit aufgesetztem Schiffchen,
- Fig. 2: einen Schnitt durch eine Filtrationseinheit mit zwei plissierten Filterelementen,
- Fig. 3: einen Schnitt durch eine Filtrationseinheit mit einem plissierten Filterelement und einem flächigen Tiefenfilterelement als Vorfilter und
- Fig. 4: einen Schnitt durch eine Filtrationseinheit, die im Crossflow-Modus betrieben wird.

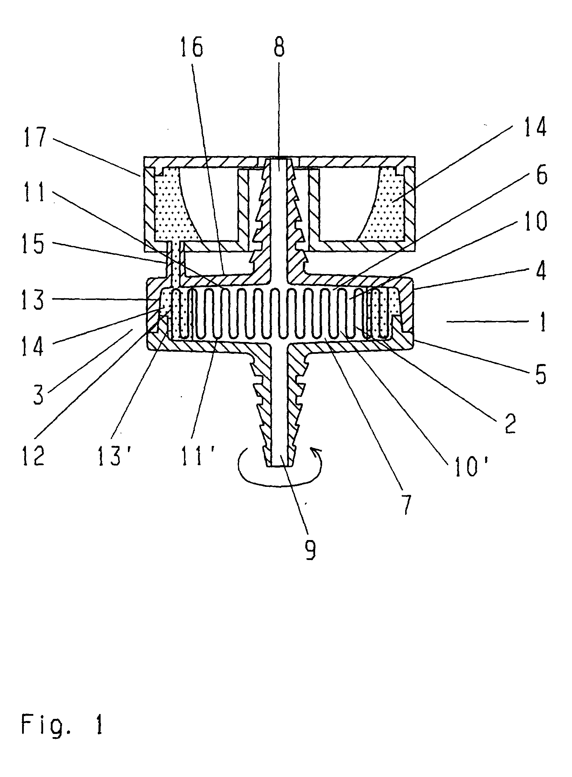

Gemäß Figur 1 besteht die Filtrationseinheit **1** aus einem plissierten Filterelement **2,** welches in einem zylinderförmigen Gehäuse **3** aus zwei Gehäuseteilen **4, 5** angeordnet ist. Die Gehäuseteile **4, 5** sind so ausgebildet, daß sie im Bereich ihrer Zylinderwand zusammengesteckt werden können. Das Filterelement **2** trennt das Gehäuse in ein- und auslaßseitige Gehäuseräume **6, 7,** die über koaxiale Fluidanschlüsse **8, 9** verfügen Die offenen Falten **10** und die Stegrücken **11** der einen Seite des plissierten Filterelements **2** sind dem einlaßseitigen Gehäuseraum **6** und die offenen Falten **10'** und Stegrücken **11'** der anderen Seite des plissierten Filterelements **2** sind dem auslaßseitigen Gehäuseraum **7** zugewandt. Die Stirnseiten **12** des plissierten Filterelements **2** sind den zylinderförmigen Gehäusewänden **13, 13'** benachbart und durch eine Dichtmasse **14** mit ihr fluiddicht verbunden.

Zur Herstellung der Filtrationseinheit wird eine kreisrunde plissierte Filterronde als Filterelement 2 in das rotationssymmetrische zylindrische Gehäuse **3** eingesetzt. Der als obere Gehäusehälfte **4** verwendete Teil verfügt über mindestens einen Konusanschluß **15,** vorzugsweise zwei gegenüberliegende Konusanschlüsse. Die Konusanschlüsse durchstoßen den als Gehäusedeckel **16** fungierenden Abschnitt der oberen Gehäusehälfte **4** und liegen im Bereich, in dem die Stirnseiten **12** des plissierten Filterelements **2** den zylindrischen Gehäusewänden **13, 13'** benachbart sind. In einer bevorzugten Ausführungsform beläßt man zwischen der äußeren Peripherie der Filterronde und der Innenwand des Gehäuses einen geringen Abstand von < 1 mm. Auf die Konusanschlüsse **15** wird ein Schiffchen **17** aufgesteckt, das das aushärtbare flüssige Polymermaterial, aus der die Dichtmasse **14** gebildet wird, enthält. Die so vorbereitete Anordnung wird in Rotation versetzt, wodurch die Dichtmasse **14** aus dem Schiffchen **17** in das Gehäuse **3** läuft und durch Fliehkraft an die Zylinderwände **13, 13'** gedrückt wird, wo sie die Gehäusehälften **4, 5** einerseits und die zylindrischen Gehäusewände **13, 13'** mit den Stirnseiten **12** des plissierten Filterelements **2** andererseits verbindet. Nach dem Aushärten der Dichtmasse **14** besteht zwischen den Bauelementen der Filtrationseinheit eine einzige fluiddichte Verbindung. Nach dem Aushärten werden die ebenfalls mit Dichtmasse **14** gefüllten Konusanschlüsse **15** zwischen oberer Gehäusehälfte **4** und Schiffchen **17** durchtrennt.

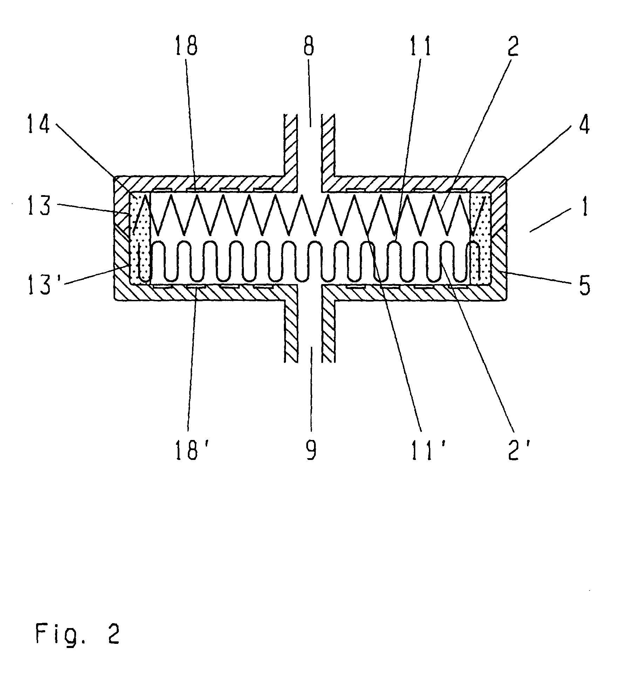

In Figur 2 ist eine erfindungsgemäße Filtrationseinheit **1** mit zwei plissierten Filterelementen **2, 2'** dargestellt. Die plissierten Filterelemente **2, 2'** sind so angeordnet, daß die Stegrücken **11'** der Plissierung des Filterelements **2** in einem Winkel ≠ 0 Grad, vorzugsweise 90 Grad, zu den Stegrücken **11** des benachbarten Filterelements **2'** angeordnet sind, wodurch sich die plissierten Filterelemente gegenseitig abstützen (nicht dargestellt). Durch die Dichtmasse **14** sind die Stirnseiten **12, 12'** der plissierten Filterelements **2, 2'** fluiddicht mit den zylinderförmigen Gehäusewänden **13, 13'** verbunden. Die Innenseite der Gehäusedeckel **16, 16'** verfügt über An- und Abströmkanäle **18, 18',** die für eine gleichmäßige Anströmung des plissierten Filterelements 2 mit zu filtrierendem Fluid und für eine gleichmäßige Abfuhr des Filtrats nach Passage der Filterelemente **2** und **2'** sorgen.

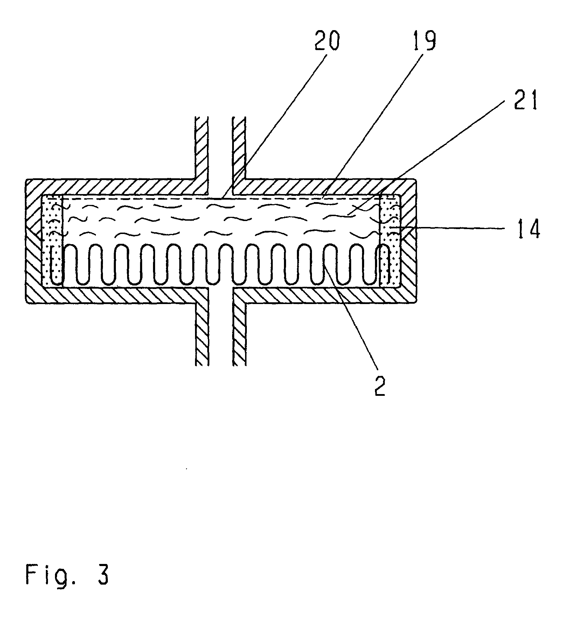

In der Figur 3 verfügt die erfindungsgemäße Filtrationseinheit zur besseren Anströmung über eine Gewebelage **19** mit einem eingearbeiteten Prallelement **20.**
Dem plissierten Filterelement **2** ist ein flächiges Tiefenfilter **21** aus zum Beispiel verwirbelten synthetischen Polymermikrofasern als Vorfilter vorgelagert.

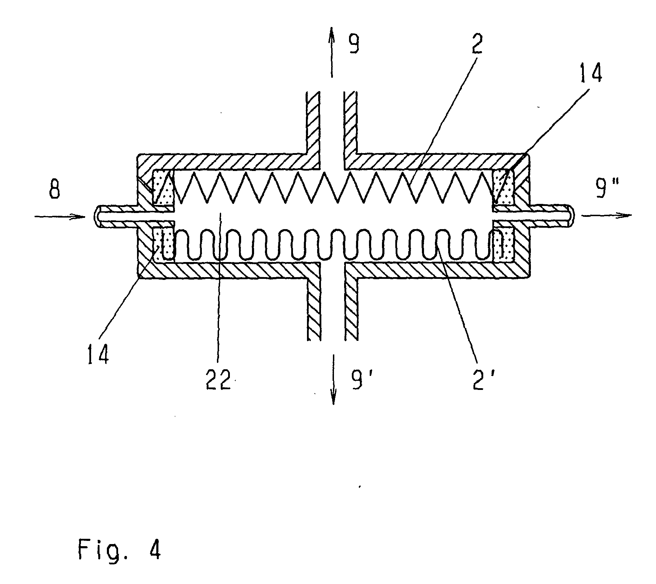

Die in Figur 4 dargestellte erfindungsgemäße Crossflow-Filtrationseinheit 1 verfügt über zwei zueinander beabstandete Filterelemente **2, 2'** zwischen die ein Anströmkanal **22** für zu filtrierendes Fluid verläuft. Das zu filtrierende Fluid wird über den Fluidanschluß **8** in die Filtrationseinheit eingeleitet und das Retentat verläßt die Filtrationseinheit über den Fluidanschluß **9".** Das Filtrat wird der Filtrationseinheit über die Fluidanschlüsse **9** und **9'** entnommen.

### Beispiel

Das nachfolgende Beispiel demonstriert eine der möglichen Anwendungen der erfindungsgemäßen Filtrationseinheit zur Trennung von Proteinen mittels Membranadsorber, bei dem die durch die große Filterfläche der plissierten Filterelemente begründete hohe Adsorptionskapazität bei geringem Filtrationswiderstand ausgenutzt wird.
Durch eine Filtrationseinheiten **1** analog Figur 2 mit vier plissierten Filterelementen **2** von je 5 cm effektivem Durchmesser und einer Plissierfaltenhöhe von je 1 cm, von denen das erste plissierte Filterelement aus drei Lagen poröser Membranadsorber mit stark sauren Ionenaustauschergruppen (Sartobind S^{R}, SARTORIUS AG), das zweite Filterelement aus drei Lagen und das dritte Filterelement aus zwei Lagen poröser Membranadsorber mit Reactive Blue 2 als Ligand und das vierte Filterelement aus drei Lagen poröser Membranadsorber mit stark basischen Ionenaustauschergruppen (Sartobind Q^{R}, Sartorius AG) besteht, wurde ein Proteingemisch aus 27,5 mg Laktat-Dehydrogenase (LDH) aus Rinderherz (SERVA Heidelberg), 27,5 mg Rinderserum-Albumin und 27,5 mg Cytochrom c (beide SIGMA Deisenhofen) in 0,01 M Natrium-Zitrat-Puffer vom pH 3,8 gepumpt.
Alle drei Proteine wurden quantitativ adsorbiert, wie die Analyse im ablaufenden Filtrat ergab. Alle drei Proteine wurden am stark sauren Adsorber adsorbiert. Danach wurde 100 ml eines 0,01 M Kalium-Phosphat-Puffers pH 7,0 durch die Filtrationseinheit gepumpt. Hierbei erfolgte die selektive Desorption der LDH und des Albumins vom sauren Adsorber und nachfolgender Adsorption am Adsorber mit Reactive Blue 2 als Liganden. Im abfließenden Filtrat konnte keines der drei Proteine nachgewisen werden. Danach wurden 100 ml eines 0,01 M Kalium-Phosphat-Puffers mit 5 mM Nicotinamid-Adenin-Dinucleotid (NADH) (SERVA Heidelberg) durch die Filtrationseinheit gepumpt. Dabei erfolgte die selektive Desorption der LDH vom Adsorber mit Reactive Blue 2 als Liganden und nachfolgender Adsorption am stark basischen Adsorber. Im abfließenden Filtrat konnte keines der drei Proteine nachgewiesen werden. Danach wurden 100 ml eines 0,01 M Na-Zitrat-Puffers pH 3,8 durch die Filtrationseinheit gepumpt. Im ablaufenden Filtrat konnte nur die LDH bestimmt werden. Danach wurden 100 ml 0,01 M Tris(hydroxymethyl)aminomethan-Cloridpuffers pH 8 durch die Filtrationseinheit gepumpt und selektiv das Albumin desorbiert. Zuletzt wurden 100 ml 1M Kalium-Phosphat-Puffer pH 7,0 durch die Filtrationseinheit gepumpt und das Cytochrom c quantitativ desorbiert.

## Patentansprüche

1. Filtrationseinheit (1) für Fluide mit mindestens einem plissierten Filterelement (2), welches in einem zylinderförmigen Gehäuse (3) aus zwei Teilen (4, 5) angeordnet ist und das Gehäuse in ein- und auslaßseitige über Fluidanschlüsse (8, 9) verfügende Gehäuseräume (6, 7) trennt, wobei die Falten (10, 10') und die Stegrücken (11, 11') quer zur zylinderförmigen Gehäusewand (13, 13') verlaufen und die offenen Falten (10) und die Stegrücken (11) der einen Seite des plissierten Filterelements (2) dem einlaßseitigen Gehäuseraum (6) und die offenen Falten (10') und Stegrücken (11') der anderen Seite des plissierten Filterelements (2) dem auslaßseitigen Gehäuseraum (7) zugewandt sind,
dadurch gekennzeichnet, daß
die Stirnseiten (12) des plissierten Filterelements (2) der zylinderförmigen Gehäusewand (13, 13') mindestens einer der beiden Teile (4, 5) des Gehäuses (3) benachbart und durch eine aushärtbare Dichtmasse (14) mit ihr fluiddicht verbunden sind.

2. Filtrationseinheit nach Anspruch 1,
dadurch gekennzeichnet, daß
die Dichtmasse (14) die beiden Teile (4, 5) des Gehäuses (3) verbindet und an ihren zylinderförmigen Gehäusewänden (13, 13') eine fluiddichte Verbindung bildet.

3. Filtrationseinheit nach den vorstehenden Ansprüchen,
dadurch gekennzeichnet, daß
die Dichtmasse (14) aus einem Material besteht, das ausgewält ist aus der Gruppe der Polyurethane und der Epoxidharze und das Gehäuse aus einem organischen Polymer besteht, das ausgewählt ist aus der Gruppe der Polystyrole, Polycarbonate, Polysulfone, Polyethersulfone und Polyacrylate.

4. Filtrationseinheit nach den vorstehenden Ansprüchen,
dadurch gekennzeichnet, daß
die plissierten Filterelemente (2, 2') so angeordnet sind, daß die Stegrücken (11') des einen Filterelements (2) in einem Winkel von 0 bis < 90° zu den Stegrücken (11) des benachbarten Filterelements (2') angeordnet sind.

5. Filtrationseinheit nach den vorstehenden Ansprüchen,
dadurch gekennzeichnet, daß
einem plissierten Filterelement (2) ein flächiges, nicht plissiertes, fasriges Tiefenfilterelement (21) benachbart ist.

6. Filtrationseinheit nach den vorstehenden Ansprüchen,
dadurch gekennzeichnet, daß
die Filterelemente (2) ein- oder mehrlagig sind und wahlweise zwischen den Plissierfalten an- und/oder abströmseitig Abstandshalter aufweisen.

7. Filtrationseinheit nach den vorstehenden Ansprüchen,
dadurch gekennzeichnet, daß
die Filterelemente (2) aus runden oder vieleckigen Membranfiltern und Tiefenfiltern bestehen.

8. Filtrationseinheit nach Anspruch 7,
dadurch gekennzeichnet, daß die Filterelemente (2) über Porengrößen im Ultrafiltrations- und Mikrofiltrationsbereich verfügen.

9. Filtrationseinheit nach Anspruch 8,
dadurch gekennzeichnet, daß
die Filtermembranen Membranadsorber sind.

10. Filtrationseinheit nach den vorstehenden Ansprüchen,
dadurch gekennzeichnet, daß
jeder einlaßseitige Gehäuseraum (6) über Fluidanschlüsse für die Zufuhr (8) von zu filtrierendem Fluid und die Abfuhr (9") von Retentat verfügt.

## Claims

1. Filtration unit (1) for fluids with at least one pleated filter element (2) which is arranged in a cylindrical housing (3) consisting of two parts (4, 5) and the housing is divided into housing chambers (6, 7), which have fluid connections (8, 9), at the inlet side and outlet side, wherein the folds (10, 10') and the web backs (11, 11') extend transversely to the cylindrical housing wall (13, 13') and the open folds (10) and the web backs (11) of one side of the pleated filter element (2) face towards the housing chamber (6) at the inlet side and the open folds (10') and the web backs (11') of the other side of the pleated filter element (2) face towards the housing chamber (7) at the outlet side, characterised in that the end faces (12) of the pleated filter element (2) are adjacent to the cylindrical housing wall (13, 13') of at least one of the two parts (4, 5) of the housing (3) and are fluid-tightly connected therewith by a hardenable sealing mass (14).

2. Filtration unit according to claim 1, characterised in that the sealing mass (14) connects the two parts (4, 5) of the housing (3) and forms a fluid-tight connection at the cylindrical housing walls (13, 13') thereof.

3. Filtration unit according to the preceding claims, characterised in that the sealing mass (14) consists of a material which is selected from the group of polyurethane and epoxy resin and the housing consists of an organic polymer which is selected from the group of polystyrol, polycarbonate, polysulfone, polyethersulfone and polyacrylate.

4. Filtration unit according to the preceding claims, characterised in that the pleated filter elements (2, 2') are so arranged that the web backs (11') of one filter element (2) are arranged at an angle of 0 to at most 90° relative to the web backs (11) of the adjacent filter element (2').

5. Filtration unit according to the preceding claims, characterised in that a pleated filter (2) is adjacent to an areal non-pleated fibrous deep-bed filter element (21).

6. Filtration unit according to the preceding claims, characterised in that the filter element (2) is single-layered or multi-layered and has spacers at the upstream and/or downstream side alternately between the pleat folds.

7. Filtration unit according to the preceding claims, characterised in that the filter elements (2) consist of round or polygonal membrane filters and deep-bed filters.

8. Filtration unit according to claim 7, characterised in that filter elements (2) have pore sizes in the ultrafiltration and microfiltration range.

9. Filtration unit according to claim 8, characterised in that the filter membranes are membrane adsorbers.

10. Filtration unit according to the preceding claims, characterised in that each housing chamber (6) at the inlet side has fluid connections for the feed (8) of fluid to be filtered and for the discharge (9") of retentate.

## Revendications

1. Unité de filtration (1) pour fluides, comportant au moins un élément filtrant plissé (2) qui est disposé dans un boîtier cylindrique (3) en deux parties (4, 5), et qui sépare le boîtier en compartiments d'entrée et de sortie (6, 7) disposant de raccords (8, 9) de .fluide, les plis (10, 10') et les dos des arcades (11, 11') s'étendant transversalement à la paroi cylindrique (13, 13') du boîtier, et les plis ouverts (10) et les dos des arcades (11) d'un côté de l'élément filtrant plissé (2) étant orientés vers le compartiment d'entrée (6) du boîtier, alors que les plis ouverts (10') et les dos des arcades (11') de l'autre côté de l'élément filtrant plissé (2) sont orientés vers le compartiment de sortie (7) du boîtier,
caractérisée en ce que
les faces frontales (12) de l'élément filtrant plissé (2) sont situées au voisinage de la paroi cylindrique (13, 13') de l'une au moins des deux parties (4, 5) du boîtier (3), et sont reliées à celle-ci de façon étanche aux fluides par une masse d'étanchéité durcissable (14).

2. Unité de filtration selon la revendication 1,
caractérisée en ce que
la masse d'étanchéité (14) relie les deux parties (4, 5) du boîtier (3) et assure une liaison étanche aux fluides au niveau de leurs parois cylindriques (13, 13') de boîtier.

3. Unité de filtration selon les revendications précédentes,
caractérisée en ce que
la masse d'étanchéité (14) est constituée d'un matériau qui est choisi dans le groupe des polyuréthanes et des résines époxy, et en ce que le boîtier est constitué d'un polymère organique qui est choisi dans le groupe des polystyrènes, des polycarbonates, des polysulfones, des polyéthersulfones et des polyacrylates.

4. Unité de filtration selon les revendications précédentes,
caractérisée en ce que
les éléments filtrants plissés (2, 2') sont disposés de telle sorte que les dos des arcades (11') de l'un des éléments filtrants (2) soient disposés suivant un angle de 0 à ≤ 90° par rapport aux dos des arcades (11) de l'élément filtrant voisin (2').

5. Unité de filtration selon les revendications précédentes,
caractérisée en ce que
un élément filtrant à lit profond (21) de grande surface, non plissé et fibreux, est voisin d'un élément filtrant plissé (2).

6. Unité de filtration selon les revendications précédentes,
caractérisée en ce que
les éléments filtrants (2) sont monocouches ou multicouches, et comportent facultativement du côté de l'afflux et/ou du reflux des écarteurs entre les plis.

7. Unité de filtration selon les revendications précédentes,
caractérisée en ce que
les éléments filtrants (2) sont constitués de filtres à membrane et de filtres à lit profond ronds ou polygonaux.

8. Unité de filtration selon la revendication 7,
caractérisée en ce que
les éléments filtrants (2) disposent de grosseurs de pores se situant dans le domaine de l'ultrafiltration et de la microfiltration.

9. Unité de filtration selon la revendication 8,
caractérisée en ce que
les membranes filtrantes sont des adsorbeurs à membrane.

10. Unité de filtration selon les revendications précédentes,
caractérisée en ce que
chaque compartiment d'entrée (6) du boîtier dispose de raccords de fluide pour l'amenée (8) de fluide à filtrer et l'évacuation (9") de rétentat.
